# EUROPEAN PATENT SPECIFICATION

(11) **EP 3 656 540 B1**
(45) Date of publication and mention of the grant of the patent: **13.04.2022**
(21) Application number: 18874478.3
(22) Date of filing: 30.10.2018
(51) Int. Cl.: B29C 64/165, B29C 64/209, B29C 64/386, B33Y 10/00, B33Y 50/00, B33Y 30/00

(54) **3D-PRINTING METHOD AND SYSTEM**
VERFAHREN UND SYSTEM ZUM 3D-DRUCKEN
PROCÉDÉ ET SYSTÈME D'IMPRESSION 3D

(30) Priority: 30.10.2017 CN 201711032220; 30.10.2017 CN 201711035710
(43) Date of publication of application: 27.05.2020
(73) Proprietor: Kocel Intelligent Machinery Limited, Yinchuan, Ningxia 750021 (CN)
(72) Inventor: PENG, Fan, Yinchuan Ningxia 750021 (CN); YANG, Bao, Yinchuan Ningxia 750021 (CN); ZHOU, Zixiang, Yinchuan Ningxia 750021 (CN); DU, Yinxue, Yinchuan Ningxia 750021 (CN); WANG, Junwei, Yinchuan Ningxia 750021 (CN); LIU, Yi, Yinchuan Ningxia 750021 (CN)
(74) Representative: Anohins, Vladimirs
(86) International application number: PCT/CN2018/112565
(87) International publication number: WO 2019/085873

(56) References cited:
- WO-A1-03/034314
- WO-A1-2015/153400
- WO-A1-2017/099162
- CN-A- 103 407 163
- CN-A- 104 441 646
- CN-A- 105 856 562
- CN-A- 107 639 824
- CN-A- 107 839 219
- CN-A- 108 501 364
- US-A1- 2006 103 051
- US-A1- 2012 156 516
- US-B1- 6 259 962

## Description

The present application claims priority to Chinese Patent Application No.201711032220.2, titled "3DP METHOD COMBINING STAGGERED-BY-LAYER PRINTING AND IN-LAYER PATTERN SEGMENTATION", filed on October 30, 2017 with the China National Intellectual Property Administration, and Chinese Patent Application No.201711035710.8, titled "STAGGERED 3DP METHOD", filed on the same day with the China National Intellectual Property Administration.

### TECHNICAL FIELD

The present disclosure relates to the field of three-dimensional (3D) printing technologies, and in particular to a three-dimensional printing (3DP) method, a 3DP system, and a comprehensive 3DP method combining staggered printing and in-layer pattern segmentation.

### BACKGROUND

In binder jetting three dimensional printing (3DP) technology, a print head moves according to two-dimensional data of a cross section of a model and selectively jets binder at corresponding positions to finally form a layer under the control of a computer. After bonding of each layer, a molding cylinder is lowered by a distance equal to thickness of one layer, and a powder supply cylinder is raised by a certain height to push out more powder, where the powder is pushed into the molding cylinder, leveled and compacted by a power spreading roller. The above process is repeated until an entire object is bonded. In the above process, if some jet holes of the print head are blocked or damaged, blank blocks on which binder cannot be jetted will be generated in an entire printing process. Accumulation of the blank blocks in multiple layers will form a broken section in a printed model, thus the printed model cannot be fully formed. If this kind of problem occurs, it is required to shut down and repair the printer in time or replace the print head, increasing costs and prolonging production cycle

US patent No. 6259962 B1 discloses an apparatus and a method for three-dimensional printing of a three-dimensional model. The apparatus includes a printing head having a plurality of nozzles, a dispenser connected to the printing head for selectively dispensing interface material in layers and curing means for optionally curing each of the layers deposited. The depth of each deposited layer is controllable by selectively adjusting the output from each of the plurality of nozzles.

### SUMMARY

In order to solve the problems of blanks and broken layers in printing caused by a few blocked jet holes of a print head in the conventional 3DP technology, a staggered 3DP method and a staggered 3DP system are provided according to the present disclosure, to stagger printing positions of each jet hole of the print head in layer-by-layer printing and thereby stagger positions of a blocked jet hole corresponding to two adjacent layers, avoiding broken sections in printing. A comprehensive 3DP method is further provided according to the present disclosure, to overcome the problems in conventional 3DP technology that broken sections may be caused by a few blocked jet holes of the print head and that printing efficiency may be affected due to the fact that the print head does not move quickly in blank areas of a pattern during printing.

In order to achieve the object of the present disclosure, a staggered 3DP method is provided. In the method, multiple jet holes at two sides of a print head along a width direction of the print head are closed and opened cyclically in a layer-by-layer printing process, so that jet positions of each jet hole on adjacent layers in a printing area are staggered with each other; and jet holes arranged along the width direction of the print head are divided into a front closed area, a rear closed area, and an open area between the front closed area and the rear closed area and for performing jet printing. In a layer-by-layer printing process, jet holes in the rear closed area are opened on a layer-by-layer basis, and jet holes in the front closed area are closed on a layer-by-layer basis, so that jet holes at a front end and a rear end of the open area are cyclically closed and opened in a staggered manner on a layer-by-layer basis to keep a width of the open area unchanged in printing of all layers, where widths of the front closed area and the rear closed area of the print head are changed in a staggered manner on a layer-by-layer basis, and the widths of the two closed areas increase or decrease between zero and a maximum width on a layer-by-layer basis.

With the staggered printing method according to the present disclosure, multiple jet holes at two sides of the print head along the width direction of the print head are closed and opened cyclically, so that jet positions of the same jet hole on adjacent layers are staggered with each other. In a case that a few jet holes of the print head are blocked, jet positions of the few blocked jet holes in adjacent layers are staggered with each other. Missing of jet of binder on a single layer due to the few blocked jet holes will not cause the problem of broken sections within a printed model, and for a few scattered blocked jet holes, since corresponding jet positions are staggered with each other in printing of each layer, the problem of broken sections on the printed model will not arise either, thereby resolving the problem that the print head cannot continue printing due to the few blocked jet holes, improving the efficiency of 3DP and reducing maintenance cost of the print head. In the printing method according to the present disclosure, jet holes at the front end and the rear end of the open area of the print head are closed and opened alternately on a layer-by-layer basis, and the width of the open area is kept unchanged, so that jet positions of each jet hole of the print head in adjacent layers are always staggered with each other in the layer-by-layer printing process.

The staggered 3DP method according to the present disclosure may include:
step 1, setting a width of the front closed area along the width direction of the print head to zero, setting a width of the rear closed area to the maximum width, aligning the open area of the print head over a printing area of a printing platform, spreading a layer of powder on the printing platform by a powder spreading device, activating jet holes in the open area of the print head to perform selective jet printing on the printing area according to a slice printing program, and lowering a worktable by a height of a layer of powder after a current layer is printed;
step 2, opening a certain number of jet holes in the rear closed area that are close to the open area, closing jet holes at the front end of the open area that occupy a same width as the certain number of jet holes to form the front closed area with the width of the open area unchanged, moving the print head to a position where the open area is aligned over the printing area of the printing platform, activating, after spreading a layer of powder in the printing area, jet holes in the open area of the print head to perform selective jet printing on the printing area according to a slice printing program of a current layer, and lowering the worktable by the height of a layer of powder after the current layer is printed;
step 3, opening a certain number of jet holes in the rear closed area that are close to the open area again, closing jet holes in the print head that are close to the front closed area and occupy a same width as the certain number of jet holes, then moving the print head to align the open area over the printing area, activating, after spreading a layer of powder in the printing area, jet holes in the open area of the print head to perform selective jet printing on the printing area according to a slice printing program of a current layer, and lowering the worktable by the height of a layer of powder after the current layer is printed;
step 4, repeating step 3 iteratively until all jet holes in the rear closed area of the print head are opened and the width of the front closed area is the same as the width of the rear closed area in step 1, moving the print head to align the open area with the printing area, and lowering the worktable by the height of a layer of powder after power spreading and printing of a current layer are completed, where at this point a cycle of staggered use of all jet holes of the print head is completed; and
step 5, restoring the print head to the state in step 1 to perform printing in a next cycle of staggered use of the jet holes, until 3DP of a product is completed.

The staggered 3DP method according to the present disclosure may include:
step 1, setting a width of the front closed area along the width direction of the print head to zero, setting a width of the rear closed area to the maximum width, aligning the open area of the print head over a printing area of a printing platform, spreading a layer of powder on the printing platform by a powder spreading device, activating jet holes in the open area of the print head to perform selective jet printing on the printing area according to a slice printing program, and lowering a worktable by a height of a layer of powder after a current layer is printed;
step 2, opening a certain number of jet holes in the rear closed area that are close to the open area, closing jet holes at the front end of the open area that occupy a same width as the certain number of jet holes to form the front closed area with the width of the open area unchanged, moving the print head to a position where the open area is aligned over the printing area of the printing platform, activating, after spreading a layer of powder in the printing area, jet holes in the open area of the print head to perform selective jet printing on the printing area according to a slice printing program of a current layer, and lowering the worktable by the height of a layer of powder after the current layer is printed;
step 3, opening a certain number of jet holes in the rear closed area that are close to the open area again, closing jet holes in the print head that are close to the front closed area and occupy a same width as the certain number of jet holes, then moving the print head to align the open area over the printing area, activating, after spreading a layer of powder in the printing area, jet holes in the open area of the print head to perform selective jet printing on the printing area according to a slice printing program of a current layer, and lowering the worktable by the height of a layer of powder after the current layer is printed;
step 4, repeating step 3 iteratively until all jet holes in the rear closed area of the print head are opened and the width of the front closed area is the same as the width of the rear closed area in step 1, moving the print head to align the open area with the printing area, and lowering the worktable by the height of a layer of powder after power spreading and printing of a current layer are completed, where at this point a cycle of forward staggered use of all jet holes of the print head is completed;
step 5, opening a certain number of jet holes in the front closed area of the print head that are close to the open area, where the width of the rear closed area along the width direction of the print head is zero and the width of the front closed area along the width direction of the print head is the maximum width after step 4 is performed, closing jet holes at the rear end of the open area that occupy a same width as the certain number of jet holes to form the rear closed area with the width of the open area unchanged, moving the print head to a position where the open area is aligned over the printing area of the printing platform, activating, after spreading a layer of powder in the printing area, jet holes in the open area of the print head to perform selective jet printing on the printing area according to a slice printing program of a current layer, and lowering the worktable by the height of a layer of powder after the current layer is printed;
step 6, opening a certain number of jet holes in the front closed area that are close to the open area again, closing jet holes in the print head that are close to the rear closed area and occupy a same width as the certain number of jet holes, then moving the print head to align the open area over the printing area, activating, after spreading a layer of powder in the printing area, jet holes in the open area of the print head to perform selective jet printing on the printing area according to a slice printing program of a current layer, and lowering the worktable by the height of a layer of powder after the current layer is printed;
step 7, repeating step 6 iteratively until all jet holes in the front closed area of the print head are opened and the width of the rear closed area is zero, moving the print head to align the open area with the printing area, and lowering the worktable by the height of a layer of powder after power spreading and printing of a current layer are completed, where at this point a cycle of reverse staggered use of all jet holes of the print head is completed; and
step 8, repeating steps 1 to 7 to perform printing in a next cycle of staggered use of the jet holes, until 3DP of a product is completed.

With the above staggered 3DP method according to the present disclosure, a 3DP product is completed. In the layer-by-layer printing of the product, some jet holes of the print head are cyclically opened and closed, so that jet positions of each jet hole on different layers are staggered with each other, and blank areas on which binder cannot be jetted are effectively filled, improving the service life of the print head, reducing costs and improving printing efficiency.

Further, a sum of the widths of the front closed area and the rear closed area of the print head is 5% to 40% of a total width of the print head.

Further, the sum of the widths of the front closed area and the rear closed area of the print head is 7% to 10% of the total width of the print head.

A staggered 3DP system is provided. In the system, multiple jet holes are arranged at two sides of a print head along a width direction and are closed and opened cyclically, so that jet positions of each jet hole on adjacent layers in a printing area are staggered with each other in a layer-by-layer printing process; and jet holes arranged along the width direction of the print head are divided into a front closed area, a rear closed area and an open area between the front closed area and the rear closed area and for performing jet printing. In a layer-by-layer printing process, jet holes in the rear closed area are opened on a layer-by-layer basis, and jet holes in the front closed area are closed on a layer-by-layer basis, so that jet holes at a front end and a rear end of the open area are cyclically closed and opened in a staggered manner on a layer-by-layer basis to keep a width of the open area unchanged in printing of all layers, where the widths of the front closed area and the rear closed area of the print head are changed in a staggered manner on a layer-by-layer basis, and the widths of the two closed areas increase or decrease between zero and a maximum width on a layer-by-layer basis.

Further, a sum of widths of the front closed area and the rear closed area of the print head is 5% to 40% of a total width of the print head.

Further, the sum of the widths of the front closed area and the rear closed area of the print head is 7% to 10% of the total width of the print head.

### BRIEF DESCRIPTION OF THE DRAWINGS

Figure 1 shows step 1 in a first embodiment or step 1 in a second embodiment of a staggered 3DP method according the present disclosure;
Figure 2 shows step 2 in the first embodiment or steps 2 and 5 in the second embodiment of a staggered 3DP method according the present disclosure;
Figure 3 shows step 3 in the first embodiment or steps 3 and 6 in the second embodiment of a staggered 3DP method according the present disclosure;
Figure 4 shows step 4 in the first embodiment or steps 4 and 7 in the second embodiment of a staggered 3DP method according the present disclosure;
Figure 5 is a flow chart of a comprehensive 3DP method according to the present disclosure;
Figure 6 is a schematic diagram showing a staggered state of a print head and division of patterns in printing a layer using a comprehensive 3DP method according to the present disclosure; and
Figure 7 is a schematic diagram showing a staggered state of a print head and division of patterns in printing another layer using a comprehensive 3DP method according to the present disclosure.

### DETAILED DESCRIPTION OF THE EMBODIMENTS

Hereinafter, the staggered 3DP method according to the present disclosure will be described in detail with reference to specific embodiments of a staggered 3DP system in conjunction with the drawings.

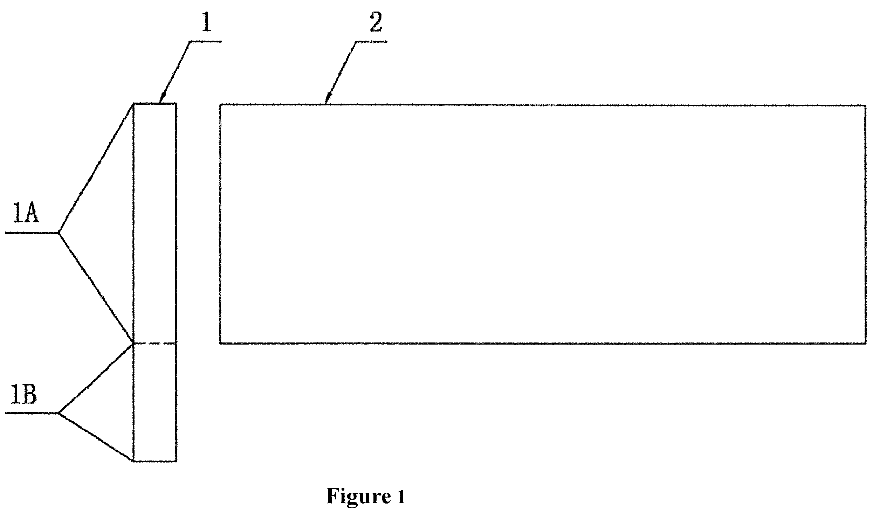

As shown in Figure 1 to Figure 4, in the staggered 3DP method according to the present disclosure, multiple jet holes at two sides of a print head 1 along a width direction of the print head are closed and opened cyclically in a layer-by-layer powder spreading and printing process, so that jet positions of each jet hole on adjacent layers in a printing area are staggered with each other.

In the staggered 3DP method according to the present disclosure, jet holes arranged along the width direction of the print head 1 are divided into a front closed area 1C, a rear closed area 1B, and an open area 1A between the front closed area and the rear closed area and for performing jet printing. In a layer-by-layer printing process, jet holes in the rear closed area 1B are opened on a layer-by-layer basis, and jet holes in the front closed area 1C are closed on a layer-by-layer basis, so that jet holes at a front end and a rear end of the open area 1A are cyclically closed and opened in a staggered manner on a layer-by-layer basis to keep a width of the open area 1A unchanged in printing of all layers. In the printing method according to the present disclosure, jet holes at the front end and the rear end of the open area 1A of the print head are closed and opened alternately on a layer-by-layer basis, and the width of the open area is kept unchanged, so that jet positions of each jet hole of the print head in adjacent layers are always staggered with each other in the layer-by-layer printing process.

According to a first embodiment of the present disclosure, the staggered 3DP method includes the following steps 1 to 5.

As shown in Figure 1, there are 1024 jet holes in the print head along an entire width of the print head according to the embodiment. In step 1, in performing jet printing of each layer, 78 jet holes of the 1024 jet holes are closed, a width of the front closed area arranged along a width direction of the print head 1 is set to zero, a width of the rear closed area 1B along the width direction of the print head 1 is set to a maximum width, that is, a closed area is entirely located at a rear end of the print head 1, that is, 78 jet holes at the rear end of the print head are closed, the open area 1A of the print head is aligned over a printing area 2 on a printing platform, a layer of powder is spread on the printing platform by a powder spreading device, jet holes in the open area 1A of the print head are activated to perform selective jet printing on the printing area 2 according to a slice printing program, and a worktable is lowered by a height of a layer of powder after a current layer is printed.

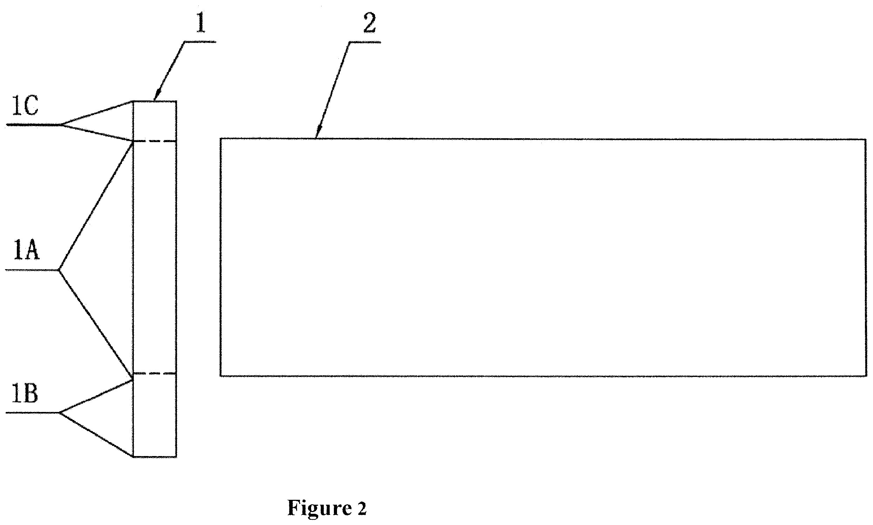

In step 2, as shown in Figure 2, 26 jet holes in the rear closed area 1B that are close to the open area 1A are opened, 26 jet holes at a front end of the open area 1A are closed to form the front closed area 1C with the width of the open area 1A unchanged, the print head is moved to a position where the open area 1A of the print head is aligned over the printing area 2 of the printing platform, jet holes in the open area 1A of the print head are activated to perform selective jet printing on the printing area according to a slice printing program of a current layer after a layer of powder is spread in the printing area 2, and the worktable is lowered by the height of a layer of powder after the current layer is printed.

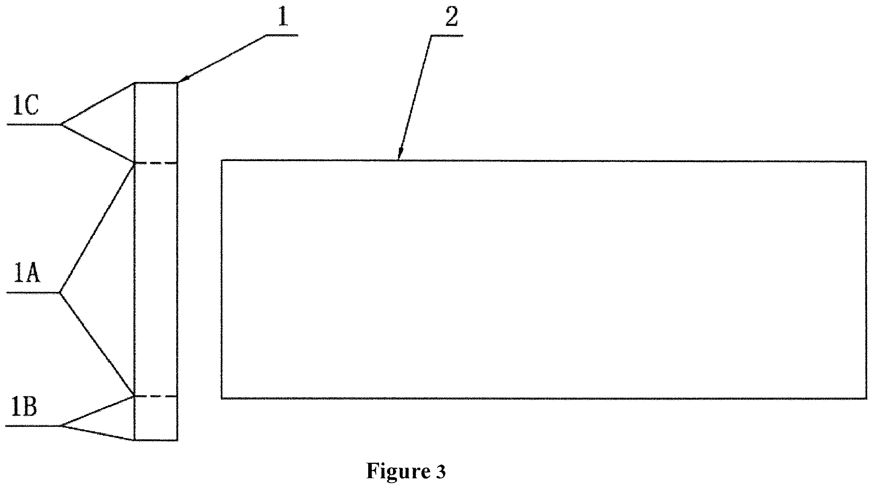

In step 3, as shown in Figure 3, 26 jet holes in the rear closed area 1B that are close to the open area are opened again, 26 jet holes in the print head that are close to the front closed area 1C are closed, then the print head 1 is moved to align the open area 1A over the printing area 2, jet holes in the open area of the print head are activated to perform selective jet printing on the printing area according to a slice printing program of a current layer after a layer of powder is spread in the printing area, and the worktable is lowered by the height of a layer of powder after the current layer is printed.

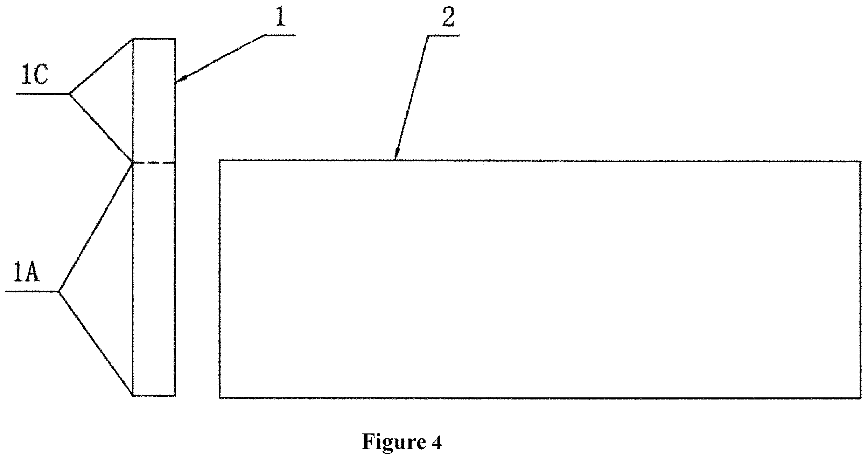

In step 4, as shown in Figure 4, 26 remaining jet holes in the rear closed area are opened, 26 jet holes in the open area 1A that are close the front closed area are closed, where at this point all jet holes in the rear closed area are opened and 78 jet holes in the front close are all opened, the print head is moved to align the open area 1A with the printing area 2, and the worktable is lowered by the height of a layer of powder after power spreading and printing of a current layer are completed. At this point, a cycle of staggered use of all jet holes of the print head is completed. In the cycle of staggered use of all jet holes of the print head, jet positions of each jet hole on adjacent layers are staggered with each by 26 jet holes along the width direction.

In step 5, the closed areas and the open area of the print head are restored to the state in step 1 to perform printing in a next cycle of staggered use of the jet holes, until 3DP of a product is completed.

After steps 1 to 4 are performed, step 5 may alternatively include: performing step 3, step 2, and step 1 in sequence by the print head from a current state, and lowering the worktable by the height of a layer of powder after the current layer is printed; repeating step 1 iteratively until all jet holes in the front closed area of the print head are opened and the width of the rear closed area is the same as the width of the front closed area in step 1; moving the print head to a position where the open area is aligned with the printing area, and lowering the worktable by the height of a layer of powder after powder spreading and print of a current layer is completed. At this point, a cycle of staggered use of all the jet holes of the print head is completed, and printing in a next cycle of staggered use of the jet holes is started from the state in step 1 until the 3DP of the product is completed.

According to a second embodiment of the present disclosure, the staggered 3DP method includes the following steps 1 to 8.

As shown in Figure 1, there are 1024 jet holes in the print head along an entire width of the print head according to the embodiment. In step 1, in performing jet printing of each layer, 78 jet holes of the 1024 jet holes are closed, a width of the front closed area arranged along a width direction of the print head 1 is set to zero, a width of the rear closed area 1B along the width direction of the print head 1 is set to a maximum width, the open area 1A of the print head is aligned over a printing area 2 on a printing platform, a layer of powder is spread on the printing platform by a powder spreading device, all jet holes in the open area 1A of the print head are activated to perform selective jet printing on the printing area 2 according to a slice printing program, and a worktable is lowered by a height of a layer of powder after a current layer is printed.

In step 2, as shown in Figure 2, 26 jet holes in the rear closed area 1B that are close to the open area 1A are opened, 26 jet holes at a front end of the open area 1A along the width direction are closed to form the front closed area 1C with the width of the open area 1A unchanged, the print head is moved to a position where the open area 1A of the print head is aligned over the printing area 2 of the printing platform, all jet holes in the open area 1A of the print head are activated to perform selective jet printing on the printing area 2 according to a slice printing program of a current layer after a layer of powder is spread in the printing area 2, and the worktable is lowered by the height of a layer of powder after the current layer is printed.

In step 3, as shown in Figure 3, 26 jet holes in the rear closed area 1B that are close to the open area 1A are opened again, 26 jet holes in the print head that are close to the front closed area 1C and occupy a same width are closed, then the print head 1 is moved to align the open area 1A over the printing area 2, all jet holes in the open area of the print head are activated to perform selective jet printing on the printing area 2 according to a slice printing program of a current layer after a layer of powder is spread in the printing area, and the worktable is lowered by the height of a layer of powder after the current layer is printed.

In step 4, step 3 is repeated iteratively until all jet holes in the rear closed area 1B of the print head are opened and a width of the front closed area 1C is the same as the width of the rear closed area 1B in step 1, the print head is moved to align the open area 1A with the printing area 2, and the worktable is lowered by the height of a layer of powder after power spreading and printing of a current layer are completed, where at this point a cycle of forward staggered use of all jet holes of the print head is completed.

As shown in Figure 3, after step 4 is performed, the width of the rear closed area 1B of the print head along the width direction is zero, and the width of the front closed area 1C along the width direction is the maximum width. In step 5, 26 jet holes in the front closed area 1C of the print head that are close to the open area 1A are opened, jet holes at the rear end of the open area 1A that occupy a same width are closed to form the rear closed area 1B with the width of the open area unchanged, the print head is moved to a position where the open area 1A of the print head is aligned over the printing area 2 of the printing platform, all jet holes in the open area 1A of the print head are activated, after a layer of powder is spread in the printing area 2, to perform selective jet printing on the printing area 2 according to a slice printing program of a current layer after a layer of powder is spread in the printing area 2, and the worktable is lowered by the height of a layer of powder after the current layer is printed.

In step 6, as shown in Figure 2, 26 jet holes in the front closed area 1C that are close to the open area 1A are opened again, jet holes of the print head that are close to the rear closed area 1B and occupy a same width, then the print head is moved to align the open area 1A over the printing area 2, all jet holes in the open area 1A of the print head are activated to perform selective jet printing on the printing area 2 according to a slice printing program of a current layer after a layer of powder is spread in the printing area 2, and the worktable is lowered by the height of a layer of powder after the current layer is printed.

In step 7, as shown in Figure 1, step 6 is repeated iteratively until the jet holes in the front closed area 1C of the print head are all opened and the width of the rear closed area 1B is equal to zero, the print head is moved to align the open area 1A with the printing area 2, and the worktable is lowered by the height of a layer of powder after power spreading and printing of a current layer are completed, where at this point a cycle of reverse staggered use of all jet holes of the print head is completed.

In step 8, steps 1 to 7 are repeated to perform printing in a next cycle of staggered use of the jet holes, until 3DP of a product is completed.

With the above staggered 3DP method according to the present disclosure, a 3DP product is completed. In the layer-by-layer printing of the product, some jet holes of the print head are cyclically opened and closed, so that jet positions of each jet hole on different layers are staggered with each other, and blank areas on which binder cannot be jetted are effectively filled, improving the service life of the print head, reducing costs and improving printing efficiency.

A staggered 3DP system is provided according to an embodiment. In the system, multiple jet holes are arranged at two sides of a print head 1 along a width direction and are closed and opened cyclically, so that jet positions of each jet hole on adjacent layers in a printing area 2 are staggered with each other in a layer-by-layer powder spreading and printing process.

Jet holes arranged along a width direction of the print head 1 are divided into a front closed area 1C, a rear closed area 1B, and an open area 1A between the front closed area and the rear closed area and for performing jet printing. In a layer-by-layer printing process, jet holes in the rear closed area 1B are opened on a layer-by-layer basis, and jet holes in the front closed area 1C are closed on a layer-by-layer basis, so that jet holes at a front end and a rear end of the open area 1 are cyclically closed and opened in a staggered manner on a layer-by-layer basis to keep a width of the open area unchanged in printing of all layers.

A sum of widths of the front closed area 1C and the rear closed area 1B of the print head 1 is 5% to 40%, more preferably, 7% to 10%, of a total width of the print head. The widths of the front closed area 1C and the rear closed area 1B of the print head 1 are changed in a staggered manner on a layer-by-layer basis, and the widths of the two closed areas increase or decrease between zero and a maximum width on a layer-by-layer basis.

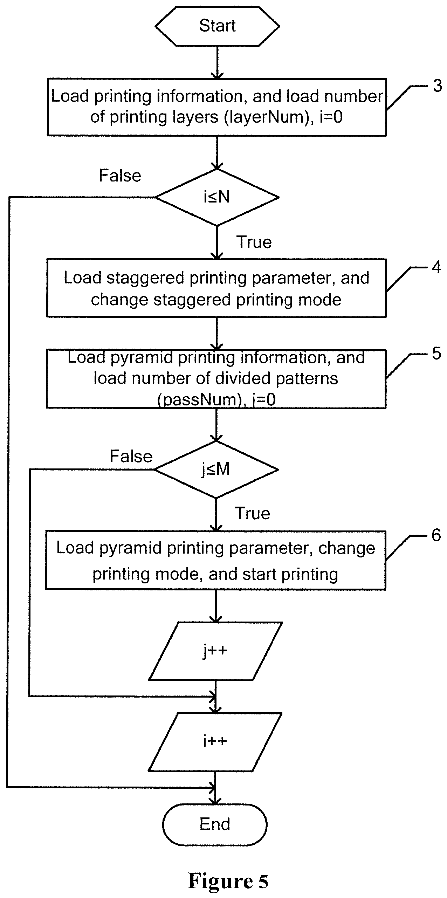

Hereinafter, a comprehensive 3DP method according to a specific embodiment of the present disclosure will be described in detail in conjunction with the Figure 5 to Figure 7, which combines staggered-by-layer printing and in-layer pattern segmentation.

According to the embodiment, the comprehensive 3DP method combining staggered-by-layer printing and in-layer pattern segmentation is performed according to the printing process shown in Figure 5.

In step 1, a data information file of a to-be-printed 3D model is read, printing information is loaded, and layering information of the 3D model is analyzed to obtain a total layer number N.

In step 2, a printing layer is checked. A current printing layer is loaded starting from layer 1. It is determined whether a serial number i of the current printing layer is less than the total layer number N. If i is greater than N, that is, in case of false, the printing process is quitted, and printing is ended. If i is less than or equal to N, that is, in case of true, step 3 is performed to execute the printing.

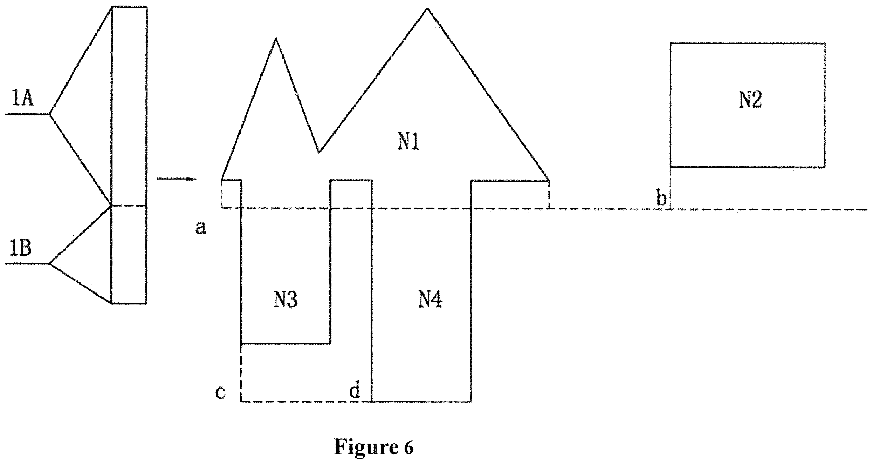

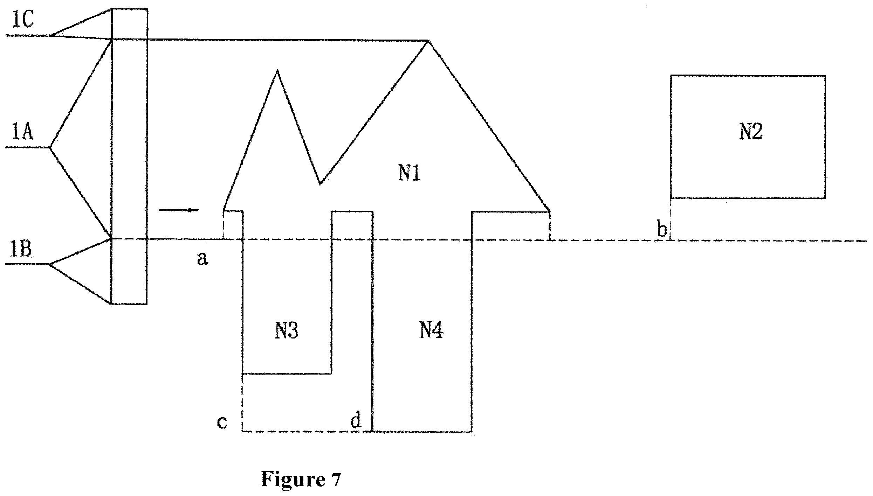

In step 3, a staggering printing parameter of a print head is loaded, and a printing width of the print head and numbers and positions of to-be-opened and to-be-closed jet holes of the print head are determined for printing a current layer. As shown in Figure 6, the staggering printing parameter of the print head is determined as follows: jet positions of each jet hole on adjacent layers in a printing area are staggered with each other by cyclically closing and opening a certain number of jet holes at two sides of a printing width of the print head along the printing width, that is, along a width direction corresponding the open area 1A in Figure 6, in a layer-by-layer printing process starting from a layer with a serial number of 1. As shown in Figure 6, the jet holes in the open area 1A of the print head are opened, and jet holes in a closed area 1B at one side of the print head are closed. In printing of the current layer, only the jet holes in the open area 1A are activated to perform selective jet printing according to a printing pattern. When performing printing of a next layer after the current layer is printed, as shown in Figure 7, the open area 1A of the print head is staggered by a certain width along the printing width direction, and a printing area 1A, a closed area 1B, and a closed area 1C are formed after the print head is staggered. Printing of the current layer is performed after the print head is staggered for the current layer. When performing printing of a next layer, the print head is further staggered to form a new open area and new closed areas, which is repeated cyclically on a layer-by-layer basis. The above process of staggering of the print head is repeated cyclically in printing of the entire model. By staggering jet holes of the print head, jet positions of each jet hole on patterns of adjacent layers are staggered with each other. Even if a few jet holes are blocked or fail, sparse missing of jetting of binder on a single layer will not affect the bonding quality of the overall layers, and the entire printed model will not have the defect of broken sections due to missing of jetting of binder on a same longitudinal position.

In step 4, a printing pattern of the current layer is divided into M closed patterns by the printing width of the print head, and a printing direction and a walking trajectory of the print head are determined based on distribution information of the M closed patterns. Figure 6 shows a printing pattern of the current layer. The whole current printing pattern is divided into four patterns N1, N2, N3, and N4 along dotted lines in the printing pattern by the printing width of the print head. When printing the four patterns in sequence, starting points of the print head corresponding to the four patterns are a, b, c, and d. That is, the walking trajectory of the print head is as follow. Pattern N1 is printed from point a, the print head is quickly moved from an end point of the pattern N1 to point b to printing pattern N2 after pattern N1 is printed, then the print head is quickly moved from an end point of pattern N2 to pattern N3 to printing pattern N3 after pattern N2 is printed, and finally the print head is quickly moved from an end point of pattern N3 to point d to printing pattern N4 after pattern N3 is printed.

In step 5, pattern information of the current printing layer is loaded. When printing patterns of the current layer, it is required to check a current pattern to determine whether printing of the current layer has been finished or is to be continued. In this step, starting from a first pattern of the current layer, a current printing pattern j of the current layer is loaded, and it is determined whether the serial number j of the current printing pattern is less than the total number M of the closed patterns of the current layer. If j is greater than M, that is, in case of false, printing of the current layer is ended and step 2 is performed to print an (i+1)*^{th}* layer. If j is less than or equal to M, that is, in case of true, step 6 is performed to execute a printing program of the current pattern.

In step 6, a printing program of the current printing pattern j of the current layer is loaded, printing information is loaded based on a printing mode corresponding to the j*^{th}* pattern, and a printing command is sent to a printing server to execute the printing of the current pattern.

In step 7, a (j+1)*^{th}* pattern of the current layer is loaded after the j*^{th}* pattern is printed, after which step 5 is performed.

In the method according the present disclosure, in printing of the layers, the print head operates in a staggered manner on a layer-by-layer basis, so that jet positions of a same jet hole on adjacent layers are staggered with each other, avoiding the defects of broken sections within a printed model caused by the failure to repair a few blocked or faulty jet holes in time. In printing of each layer, a whole pattern of each layer is divided into multiple patterns to be printed separately by a printing width, and a walking trajectory of the print head is re-designed to realize quick movement of the print head in blank areas of a printing pattern of each layer, thereby improving the printing efficiency. Therefore, by hierarchical staggered printing of the print head and performing printing after dividing the printing pattern of each layer and re-designing a printing trajectory according to the present disclosure, efficient and fast printing can be achieved, avoiding the defect of broken sections due to the few blocked jet holes in the print head, reducing maintenance costs of the print head and increasing the service life of the print head.

The present disclosure is not limited to the above embodiments. In printing of the layers, appropriate changes may be made on how to cyclically stagger opening and closing of the print head and how to divide a pattern of each layer according to printing requirements. Based on the technical solution of the present disclosure, those skilled in the art can make some equivalents and modifications to some of the technical features without any creative efforts.

## Claims

1. A staggered three-dimensional printing method, wherein
a plurality of jet holes at two sides of a print head (1) along a width direction of the print head (1) are closed and opened cyclically in a layer-by-layer printing process, whereby jet positions of each jet hole on adjacent layers in a printing area (2) are staggered with each other, and
jet holes arranged along the width direction of the print head (1) are divided into a front closed area (1C), a rear closed area (1B), and an open area (1A) between the front closed area (1C) and the rear closed area (1B) and for performing jet printing; and in a layer-by-layer printing process, jet holes in the rear closed area (1B) are opened on a layer-by-layer basis, and jet holes in the front closed area (1C) are closed on a layer-by-layer basis, whereby jet holes at a front end and a rear end of the open area (1A) are cyclically closed and opened in a staggered manner on a layer-by-layer basis to keep a width of the open area (1A) unchanged in printing of all layers,
**characterized in that** widths of the front closed area (1C) and the rear closed area (1B) of the print head (1) are changed in a staggered manner on a layer-by-layer basis, and the widths of the two closed areas increase or decrease between zero and a maximum width on a layer-by-layer basis.

2. The staggered three-dimensional printing method according to claim 1, comprising:
step 1, setting a width of the front closed area (1C) along the width direction of the print head (1) to zero, setting a width of the rear closed area (1B) to the maximum width, aligning the open area (1A) of the print head (1) over a printing area (2) of a printing platform, spreading a layer of powder on the printing platform by a powder spreading device, activating jet holes in the open area (1A) of the print head (1) to perform selective jet printing on the printing area (2) according to a slice printing program, and lowering a worktable by a height of a layer of powder after a current layer is printed;
step 2, opening a certain number of jet holes in the rear closed area (1B) that are close to the open area, closing jet holes at a front end of the open area (1A) that occupy a same width as the certain number of jet holes to form the front closed area (1C) with a width of the open area (1A) unchanged, moving the print head (1) to a position where the open area (1A) is aligned over the printing area (2) of the printing platform, activating, after spreading a layer of powder in the printing area (2), the jet holes in the open area (1A) of the print head (1) to perform selective jet printing on the printing area (2) according to a slice printing program of a current layer, and lowering the worktable by the height of a layer of powder after the current layer is printed;
step 3, opening a certain number of jet holes in the rear closed area (1B) that are close to the open area (1A) again, closing jet holes in the print head (1) that are close to the front closed area (1C) and occupy a same width as the certain number of jet holes, moving the print head (1) to align the open area (1A) over the printing area (2), activating, after spreading a layer of powder in the printing area (2), jet holes in the open area (1A) of the print head (1) to perform selective jet printing on the printing area (2) according to a slice printing program of a current layer, and lowering the worktable by the height of a layer of powder after the current layer is printed;
step 4, repeating step 3 iteratively until all jet holes in the rear closed area (1B) of the print head (1) are opened and the width of the front closed area (1C) is the same as the width of the rear closed area (1B) in step 1, moving the print head (1) to align the open area (1A) with the printing area (2), and lowering the worktable by the height of a layer of powder after power spreading and printing of a current layer are completed, wherein at this point a cycle of staggered use of all jet holes of the print head (1) is completed; and
step 5, restoring the print head (1) to the state in step 1 to perform printing in a next cycle of staggered use of the jet holes, until three-dimensional printing of a product is completed.

3. The staggered three-dimensional printing method according to claim 1, comprising:
step 1, setting a width of the front closed area (1C) along the width direction of the print head (1) to zero, setting a width of the rear closed area (1B) to the maximum width, aligning the open area (1A) of the print head (1) over a printing area (2) of a printing platform, spreading a layer of powder on the printing platform by a powder spreading device, activating jet holes in the open area (1A) of the print head (1) to perform selective jet printing on the printing area (2) according to a slice printing program, and lowering a worktable by a height of a layer of powder after a current layer is printed;
step 2, opening a certain number of jet holes in the rear closed area (1B) that are close to the open area, closing jet holes at a front end of the open area (1A) that occupy a same width as the certain number of jet holes to form the front closed area (1C) with a width of the open area (1A) unchanged, moving the print head (1) to a position where the open area (1A) is aligned over the printing area (2) of the printing platform, activating, after spreading a layer of powder in the printing area (2), jet holes in the open area (1A) of the print head (1) to perform selective jet printing on the printing area (2) according to a slice printing program of a current layer, and lowering the worktable by the height of a layer of powder after the current layer is printed;
step 3, opening a certain number of jet holes in the rear closed area (1B) that are close to the open area (1A) again, closing jet holes in the print head (1) that are close to the front closed area (1C) and occupy a same width as the certain number of jet holes, moving the print head (1) to align the open area (1A) over the printing area (2), activating, after spreading a layer of powder in the printing area (2), jet holes in the open area (1A) of the print head (1) to perform selective jet printing on the printing area (2) according to a slice printing program of a current layer, and lowering the worktable by the height of a layer of powder after the current layer is printed;
step 4, repeating step 3 iteratively until all jet holes in the rear closed area (1B) of the print head (1) are opened and the width of the front closed area (1C) is the same as the width of the rear closed area (1B) in step 1, moving the print head (1) to align the open area (1A) with the printing area (2), and lowering the worktable by the height of a layer of powder after power spreading and printing of a current layer are completed, wherein at this point a cycle of forward staggered use of all jet holes of the print head (1) is completed;
step 5, opening a certain number of jet holes in the front closed area (1C) of the print head (1) that are close to the open area, wherein the width of the rear closed area (1B) along the width direction of the print head (1) is zero and the width of the front closed area (1C) along the width direction of the print head (1) is the maximum width after step 4 is performed, closing jet holes at a rear end of the open area (1A) that occupy a same width as the certain number of jet holes to form the rear closed area (1B) with the width of the open area (1A) unchanged, moving the print head (1) to a position where the open area (1A) is aligned over the printing area (2) of the printing platform, activating, after spreading a layer of powder in the printing area (2), jet holes in the open area (1A) of the print head (1) to perform selective jet printing on the printing area (2) according to a slice printing program of a current layer, and lowering the worktable by the height of a layer of powder after the current layer is printed;
step 6, opening a certain number of jet holes in the front closed area (1C) that are close to the open area (1A) again, closing jet holes in the print head (1) that are close to the rear closed area (1B) and occupy a same width as the certain number of jet holes, moving the print head (1) to align the open area (1A) over the printing area (2), activating, after spreading a layer of powder in the printing area (2), jet holes in the open area (1A) of the print head (1) to perform selective jet printing on the printing area (2) according to a slice printing program of a current layer, and lowering the worktable by the height of a layer of powder after the current layer is printed;
step 7, repeating step 6 iteratively until all jet holes in the front closed area (1C) of the print head (1) are opened and the width of the rear closed area (1B) is zero, moving the print head (1) to align the open area (1A) with the printing area (2), and lowering the worktable by the height of a layer of powder after power spreading and printing of a current layer are completed, wherein at this point a cycle of reverse staggered use of all jet holes of the print head (1) is completed; and
step 8, repeating steps 1 to 7 to perform printing in a next cycle of staggered use of the jet holes, until three-dimensional printing of a product is completed.

4. The staggered three-dimensional printing method according to claim 1, wherein a sum of widths of the front closed area (1C) and the rear closed area (1B) of the print head (1) is 5% to 40% of a total width of the print head (1).

5. The staggered three-dimensional printing method according to claim 4, wherein the sum of the widths of the front closed area (1C) and the rear closed area (1B) of the print head (1) is 7% to 10% of the total width of the print head (1).

6. A staggered three-dimensional printing system configured such that
a plurality of jet holes arranged at two sides of a print head (1) along a width direction are closed and opened cyclically, and such that jet positions of each jet hole on adjacent layers in a printing area (2) are staggered with each other in a layer-by-layer printing process, and
jet holes arranged along the width direction of the print head (1) are divided into a front closed area (1C), a rear closed area (1B) and an open area (1A) between the front closed area (1C) and the rear closed area (1B) and for performing jet printing; and in a layer-by-layer printing process, jet holes in the rear closed area (1B) are opened on a layer-by-layer basis, and jet holes in the front closed area (1C) are closed on a layer-by-layer basis, whereby jet holes at a front end and a rear end of the open area (1A) are cyclically closed and opened in a staggered manner on a layer-by-layer basis to keep a width of the open area (1A) unchanged in printing of all layers,
**characterized in that** the staggered three-dimensional printing system is further configured such that widths of the front closed area (1C) and the rear closed area (1B) of the print head (1) are changed in a staggered manner on a layer-by-layer basis, and the widths of the two closed areas increase or decrease between zero and a maximum width on a layer-by-layer basis.

7. The staggered three-dimensional printing system according to claim 6, wherein a sum of widths of the front closed area (1C) and the rear closed area (1B) of the print head (1) is 5% to 40% of a total width of the print head (1).

8. The staggered three-dimensional printing system according to claim 7, wherein the sum of the widths of the front closed area (1C) and the rear closed area (1B) of the print head (1) is 7% to 10% of the total width of the print head (1).

## Patentansprüche

1. Gestaffeltes dreidimensionales Druckverfahren, bei dem
eine Vielzahl von Strahllöchern an zwei Seiten eines Druckkopfes (1) entlang einer Breitenrichtung des Druckkopfes (1) zyklisch in einem schichtweisen Druckprozess geschlossen und geöffnet werden, wobei die Strahlpositionen jedes Strahllochs auf benachbarten Schichten in einem Druckbereich (2) zueinander gestaffelt sind, und
wobei die Strahllöcher, die entlang der Breitenrichtung des Druckkopfes (1) angeordnet sind, in einen vorderen geschlossenen Bereich (1C), einen hinteren geschlossenen Bereich (1B) und einen offenen Bereich (1A) zwischen dem vorderen geschlossenen Bereich (1C) und dem hinteren geschlossenen Bereich (1B) unterteilt sind und zur Durchführung des Tintenstrahldrucks dienen; und wobei in einem schichtweisen Druckprozess die Strahllöcher in dem hinteren geschlossenen Bereich (1B) auf einer schichtweise Basis geöffnet werden , und die Strahllöcher in dem vorderen geschlossenen Bereich (1C) auf einer schichtweise Basis geschlossen werden , wodurch Strahllöcher an einem vorderen Ende und einem hinteren Ende des offenen Bereichs (1A) zyklisch auf einer schichtweise in einer gestaffelten Weise geschlossen und geöffnet werden, um eine Breite des offenen Bereichs (1A) beim Drucken aller Schichten unverändert zu halten,
**dadurch gekennzeichnet, dass** die Breiten des vorderen geschlossenen Bereichs (1C) und des hinteren geschlossenen Bereichs (1B) des Druckkopfs (1) schichtweise gestaffelt verändert werden und die Breiten der beiden geschlossenen Bereiche schichtweise zwischen Null und einer maximalen Breite zunehmen oder abnehmen.

2. Gestaffeltes dreidimensionales Druckverfahren nach Anspruch 1, umfassend:
Schritt 1, Einstellen einer Breite des vorderen geschlossenen Bereichs (1C) entlang der Breitenrichtung des Druckkopfs (1) auf Null, Einstellen einer Breite des hinteren geschlossenen Bereichs (1B) auf die maximale Breite, Ausrichten des offenen Bereichs (1A) des Druckkopfs (1) über einen Druckbereich (2) einer Druckplattform, Ausbreiten einer Pulverschicht auf der Druckplattform durch eine Pulverausbreitungsvorrichtung, Aktivieren von Strahllöchern in dem offenen Bereich (1A) des Druckkopfes (1), um einen selektiven Tintenstrahldruck auf dem Druckbereich (2) gemäß einem Schichtdruckprogramm durchzuführen, und Absenken eines Arbeitstisches um eine Höhe einer Pulverschicht, nachdem eine aktuelle Schicht gedruckt wurde;
Schritt 2, Öffnen einer bestimmten Anzahl von Strahllöchern in dem hinteren geschlossenen Bereich (1B), die nahe an dem offenen Bereich liegen, Schließen von Strahllöchern an einem vorderen Ende des offenen Bereichs (1A), die dieselbe Breite wie die bestimmte Anzahl von Strahllöchern einnehmen, um den vorderen geschlossenen Bereich (1C) zu bilden, wobei eine Breite des offenen Bereichs (1A) unverändert bleibt, Bewegen des Druckkopfs (1) in eine Position, in der der offene Bereich (1A) über dem Druckbereich (2) der Druckplattform ausgerichtet ist, Aktivieren der Strahllöcher in dem offenen Bereich (1A) des Druckkopfes (1) nach dem Auftragen einer Pulverschicht in dem Druckbereich (2), um einen selektiven Tintenstrahldruck auf dem Druckbereich (2) gemäß einem Schichtdruckprogramm einer aktuellen Schicht auszuführen, und Absenken des Arbeitstisches um die Höhe einer Pulverschicht, nachdem die aktuelle Schicht gedruckt wurde;
Schritt 3: Öffnen einer bestimmten Anzahl von Strahllöchern in dem hinteren geschlossenen Bereich (1B), die sich in der Nähe des offenen Bereichs (1A) befinden, Wiederverschließen von Strahllöchern in dem Druckkopf (1), die sich in der Nähe des vorderen geschlossenen Bereichs (1C) befinden und dieselbe Breite wie die bestimmte Anzahl von Strahllöchern einnehmen, Bewegen des Druckkopfs (1), um den offenen Bereich (1A) über dem Druckbereich (2) auszurichten, Aktivieren von Strahllöchern in dem offenen Bereich (1A) des Druckkopfes (1) nach dem Auftragen einer Pulverschicht in dem Druckbereich (2), um einen selektiven Tintenstrahldruck auf dem Druckbereich (2) gemäß einem Schichtdruckprogramm einer aktuellen Schicht auszuführen, und Absenken des Arbeitstisches um die Höhe einer Pulverschicht, nachdem die aktuelle Schicht gedruckt wurde;
Schritt 4, iteratives Wiederholen von Schritt 3, bis alle Strahllöcher im hinteren geschlossenen Bereich (1B) des Druckkopfs (1) geöffnet sind und die Breite des vorderen geschlossenen Bereichs (1C) gleich der Breite des hinteren geschlossenen Bereichs (1B) in Schritt 1 ist, Bewegen des Druckkopfs (1), um den offenen Bereich (1A) mit dem Druckbereich (2) auszurichten, und Absenken des Arbeitstisches um die Höhe einer Pulverschicht, nachdem die Energieverteilung und das Drucken einer aktuellen Schicht abgeschlossen sind, wobei an diesem Punkt ein Zyklus der gestaffelten Verwendung aller Strahllöcher des Druckkopfes (1) abgeschlossen ist; und
Schritt 5: Zurückversetzen des Druckkopfs (1) in den Zustand von Schritt 1, um den Druck in einem nächsten Zyklus mit gestaffelter Verwendung der Strahllöcher durchzuführen, bis der dreidimensionale Druck eines Produkts abgeschlossen ist.

3. Gestaffeltes dreidimensionales Druckverfahren nach Anspruch 1, umfassend:
Schritt 1, Einstellen einer Breite des vorderen geschlossenen Bereichs (1C) entlang der Breitenrichtung des Druckkopfs (1) auf Null, Einstellen einer Breite des hinteren geschlossenen Bereichs (1B) auf die maximale Breite, Ausrichten des offenen Bereichs (1A) des Druckkopfs (1) über einen Druckbereich (2) einer Druckplattform, Ausbreiten einer Pulverschicht auf der Druckplattform durch eine Pulverausbreitungsvorrichtung, Aktivieren von Strahllöchern in dem offenen Bereich (1A) des Druckkopfes (1), um einen selektiven Tintenstrahldruck auf dem Druckbereich (2) gemäß einem Schichtdruckprogramm durchzuführen, und Absenken eines Arbeitstisches um eine Höhe einer Pulverschicht, nachdem eine aktuelle Schicht gedruckt wurde;
Schritt 2, Öffnen einer bestimmten Anzahl von Strahllöchern in dem hinteren geschlossenen Bereich (1B), die nahe an dem offenen Bereich liegen, Schließen von Strahllöchern an einem vorderen Ende des offenen Bereichs (1A), die dieselbe Breite wie die bestimmte Anzahl von Strahllöchern einnehmen, um den vorderen geschlossenen Bereich (1C) zu bilden, wobei eine Breite des offenen Bereichs (1A) unverändert bleibt, Bewegen des Druckkopfes (1) in eine Position, in der der offene Bereich (1A) über dem Druckbereich (2) der Druckplattform ausgerichtet ist, Aktivieren von Strahllöchern in dem offenen Bereich (1A) des Druckkopfes (1) nach dem Auftragen einer Pulverschicht in dem Druckbereich (2), um einen selektiven Tintenstrahldruck auf dem Druckbereich (2) gemäß einem Schichtdruckprogramm einer aktuellen Schicht durchzuführen, und Absenken des Arbeitstisches um die Höhe einer Pulverschicht, nachdem die aktuelle Schicht gedruckt ist;
Schritt 3,erneutes Öffnen einer bestimmten Anzahl von Strahllöchern im hinteren geschlossenen Bereich (1B), die sich in der Nähe des offenen Bereichs (1A) befinden, Schließen von Strahllöchern im Druckkopf (1), die sich in der Nähe des vorderen geschlossenen Bereichs (1C) befinden und dieselbe Breite wie die bestimmte Anzahl von Strahllöchern einnehmen, Bewegen des Druckkopfs (1), um den offenen Bereich (1A) über dem Druckbereich (2) auszurichten, Aktivieren, nach dem Auftragen einer Pulverschicht in dem Druckbereich (2), Strahllöcher in dem offenen Bereich (1A) des Druckkopfes (1), um einen selektiven Tintenstrahldruck auf dem Druckbereich (2) gemäß einem Schichtdruckprogramm einer aktuellen Schicht durchzuführen, und Absenken des Arbeitstisches um die Höhe einer Pulverschicht, nachdem die aktuelle Schicht gedruckt ist;
Schritt 4, iteratives Wiederholen von Schritt 3, bis alle Strahllöcher im hinteren geschlossenen Bereich (IB) des Druckkopfs (1) geöffnet sind und die Breite des vorderen geschlossenen Bereichs (1C) gleich der Breite des hinteren geschlossenen Bereichs (1B) in Schritt 1 ist, Bewegen des Druckkopfs (1), um den offenen Bereich (1A) mit dem Druckbereich (2) auszurichten, und Absenken des Arbeitstisches um die Höhe einer Pulverschicht, nachdem die Energieverteilung und das Drucken einer aktuellen Schicht abgeschlossen sind, wobei an diesem Punkt ein Zyklus der vorwärts gestaffelten Verwendung aller Strahllöcher des Druckkopfes (1) abgeschlossen ist;
Schritt 5, Öffnen einer bestimmten Anzahl von Strahllöchern in dem vorderen geschlossenen Bereich (1C) des Druckkopfes (1), die nahe an dem offenen Bereich liegen, wobei die Breite des hinteren geschlossenen Bereichs (1B) entlang der Breitenrichtung des Druckkopfes (1) Null ist und die Breite des vorderen geschlossenen Bereichs (IC) entlang der Breitenrichtung des Druckkopfes (1) die maximale Breite ist, nachdem Schritt 4 ausgeführt wurde, Schließen von Strahllöchern an einem hinteren Ende des offenen Bereichs (1A), die eine gleiche Breite wie die bestimmte Anzahl von Strahllöchern einnehmen, um den hinteren geschlossenen Bereich (1B) zu bilden, wobei die Breite des offenen Bereichs (IA) unverändert bleibt, Bewegen des Druckkopfes (1) in eine Position, in der der offene Bereich (1A) über dem Druckbereich (2) der Druckplattform ausgerichtet ist, Aktivieren von Strahllöchern in dem offenen Bereich (1A) des Druckkopfes (1) nach dem Auftragen einer Pulverschicht in dem Druckbereich (2), um einen selektiven Tintenstrahldruck auf dem Druckbereich (2) gemäß einem Schichtdruckprogramm einer aktuellen Schicht durchzuführen, und Absenken des Arbeitstisches um die Höhe einer Pulverschicht, nachdem die aktuelle Schicht gedruckt ist;
Schritt 6: Öffnen einer bestimmten Anzahl von Strahllöchern in dem vorderen geschlossenen Bereich (1C), die sich in der Nähe des offenen Bereichs (1A) befinden, Wiederverschließen von Strahllöchern in dem Druckkopf (1), die sich in der Nähe des hinteren geschlossenen Bereichs (IB) befinden und dieselbe Breite wie die bestimmte Anzahl von Strahllöchern einnehmen, Bewegen des Druckkopfs (1), um den offenen Bereich (1A) über dem Druckbereich (2) auszurichten, Aktivieren von Strahllöchern in dem offenen Bereich (1A) des Druckkopfes (1) nach dem Auftragen einer Pulverschicht in dem Druckbereich (2), um einen selektiven Tintenstrahldruck auf dem Druckbereich (2) gemäß einem Schichtdruckprogramm einer aktuellen Schicht auszuführen, und Absenken des Arbeitstisches um die Höhe einer Pulverschicht, nachdem die aktuelle Schicht gedruckt wurde;
Schritt 7, iteratives Wiederholen von Schritt 6, bis alle Strahllöcher in dem vorderen geschlossenen Bereich (1C) des Druckkopfs (1) geöffnet sind und die Breite des hinteren geschlossenen Bereichs (IB) Null ist, Bewegen des Druckkopfs (1), um den offenen Bereich (1A) mit dem Druckbereich (2) auszurichten, und Absenken des Arbeitstisches um die Höhe einer Pulverschicht, nachdem das Ausbringen von Energie und das Drucken einer aktuellen Schicht abgeschlossen sind, wobei an diesem Punkt ein Zyklus der umgekehrten gestaffelten Verwendung aller Strahllöcher des Druckkopfs (1) abgeschlossen ist; und
Schritt 8, Wiederholen der Schritte 1 bis 7 zur Durchführung des Drucks in einem nächsten Zyklus der gestaffelten Verwendung der Strahllöcher, bis der dreidimensionale Druck eines Produkts abgeschlossen ist.

4. Gestaffeltes dreidimensionales Druckverfahren nach Anspruch 1, wobei die Summe der Breiten des vorderen geschlossenen Bereichs (1C) und des hinteren geschlossenen Bereichs (1B) des Druckkopfs (1) 5 % bis 40 % der Gesamtbreite des Druckkopfs (1) beträgt.

5. Gestaffeltes dreidimensionales Druckverfahren nach Anspruch 4, wobei die Summe der Breiten des vorderen geschlossenen Bereichs (1C) und des hinteren geschlossenen Bereichs (1B) des Druckkopfs (1) 7 % bis 10 % der Gesamtbreite des Druckkopfs (1) beträgt.

6. Gestaffeltes dreidimensionales Drucksystem, das so konfiguriert ist, dass eine Vielzahl von Strahllöchern, die an zwei Seiten eines Druckkopfes (1) entlang einer Breitenrichtung angeordnet sind, zyklisch geschlossen und geöffnet werden, und dass Strahlpositionen jedes Strahllochs auf benachbarte Schichten in einem Druckbereich (2) in einem schichtweisen Druckprozess zueinander versetzt sind, und dass Strahllöcher, die entlang der Breitenrichtung des Druckkopfes (1) angeordnet sind, in einen vorderen geschlossenen Bereich (1C), einen hinteren geschlossenen Bereich (1B) und einen offenen Bereich (1A) zwischen dem vorderen geschlossenen Bereich (1C) und dem hinteren geschlossenen Bereich (1B) unterteilt sind und zum Durchführen von Strahldruck dienen, wobei in einem schichtweisen Druckprozess Strahllöchern in dem hinteren geschlossenen Bereich (1B) auf einer schichtweisen Basis geöffnet werden, und Strahllöchern in dem vorderen geschlossenen Bereich (1C) auf einer schichtweisen Basis geschlossen werden, wodurch Strahllöchern an einem vorderen Ende und einem hinteren Ende des offenen Bereichs (1A) zyklisch auf einer schichtweisen Basis in einer gestaffelten Weise geschlossen und geöffnet werden, um eine Breite des offenen Bereichs (1A) beim Drucken aller Schichten unverändert zu halten,
**dadurch gekennzeichnet, dass** das gestaffelte dreidimensionale Drucksystem ferner so konfiguriert ist, dass die Breiten des vorderen geschlossenen Bereichs (1C) und des hinteren geschlossenen Bereichs (1B) des Druckkopfs (1) schichtweise gestaffelt verändert werden und die Breiten der beiden geschlossenen Bereiche schichtweise zwischen Null und einer maximalen Breite zunehmen oder abnehmen.

7. Gestaffeltes dreidimensionales Drucksystem nach Anspruch 6, wobei die Summe der Breiten des vorderen geschlossenen Bereichs (IC) und des hinteren geschlossenen Bereichs (IB) des Druckkopfs (1) 5% bis 40% der Gesamtbreite des Druckkopfs (1) beträgt.

8. Gestaffeltes dreidimensionales Drucksystem nach Anspruch 7, wobei die Summe der Breiten des vorderen geschlossenen Bereichs (1C) und des hinteren geschlossenen Bereichs (1B) des Druckkopfs (1) 7% bis 10% der Gesamtbreite des Druckkopfs (1) beträgt.

## Revendications

1. Procédé d'impression tridimensionnelle en quinconce, dans lequel
une pluralité de trous de jet sur deux côtés d'une tête d'impression (1) le long d'une direction de largeur de ladite tête d'impression (1) sont fermés et ouverts cycliquement dans un processus d'impression couche par couche, de sorte que les positions de jet de chaque trou de jet sur les couches adjacentes dans une zone d'impression (2) sont en quinconce les unes par rapport aux autres, et
les trous de jet disposés le long de ladite direction de largeur de ladite tête d'impression (1) sont divisés en une zone fermée avant (1C), une zone fermée arrière (1B) et une zone ouverte (1A) entre ladite zone fermée avant (1C) et ladite zone fermée arrière (1B) et pour effectuer une impression de jet; et dans un procédé d'impression couche par couche, les trous de jet dans ladite zone fermée arrière (1B) sont ouverts couche par couche, et les trous de jet dans ladite zone fermée avant (1C) sont fermés couche par couche, de sorte que les trous de jet à une extrémité avant et une extrémité arrière de ladite zone ouverte (1A) sont cycliquement fermés et ouverts couche par couche en quinconce pour maintenir une largeur de ladite zone ouverte (1A) inchangé dans l'impression de toutes les couches,
**caractérisé en ce que** largeurs de ladite zone fermée avant (1C) et de ladite zone fermée arrière (1B) de ladite tête d'impression (1) sont modifiées couche par couche en quinconce, et lesdites largeurs desdites deux zones fermées augmenter ou diminuer entre zéro et une largeur maximale couche par couche.

2. Procédé d'impression tridimensionnelle en quinconce selon la revendication 1, le procédé comprenant les étapes consistant à :
étape 1, régler une largeur de ladite zone fermée avant (1C) le long de ladite direction de largeur de ladite tête d'impression (1) à zéro; régler une largeur de ladite zone fermée arrière (1B) à ladite largeur maximale; aligner de ladite zone ouverte (1A) de ladite tête d'impression (1) sur une zone d'impression (2) d'une plateforme d'impression; étaler une couche de poudre sur ladite plateforme d'impression par un dispositif d'étalement de poudre, activer des trous de jet dans ladite zone ouverte (1A) de ladite tête d'impression (1) pour effectuer une impression de jet sélectif sur ladite zone d'impression (2) selon un programme d'impression en tranches; et abaisser une table de travail d'une hauteur d'une couche de poudre après qu'une couche courante a été imprimée;
étape 2, ouvrir un certain nombre de trous de jet dans ladite zone fermée arrière (1B) qui sont proches de ladite zone ouverte; fermer des trous de jet à une extrémité avant de ladite zone ouverte (1A) qui occupent la même largeur que ledit certain nombre de trous de jet pour former ladite zone fermée avant (1C) avec une largeur de ladite zone ouverte (1A) inchangée; déplacer ladite tête d'impression (1) vers une position où ladite zone ouverte (1A) est alignée sur ladite zone d'impression (2) de ladite plateforme d'impression; activer, après avoir étalé une couche de poudre dans ladite zone d'impression (2), lesdits trous de jet dans ladite zone ouverte (1A) de ladite tête d'impression (1) pour effectuer une impression de jet sélectif sur ladite zone d'impression (2) selon à un programme d'impression en tranches d'une couche courante; et abaisser ladite table de travail de ladite hauteur d'une couche de poudre après que ladite couche courante a été imprimée;
étape 3, ouvrir à nouveau un certain nombre de trous de jet dans ladite zone fermée arrière (1B) qui sont proches de ladite zone ouverte (1A); fermer des trous de jet dans ladite tête d'impression (1) qui sont proches de ladite zone fermée avant (1C) et occupent une même largeur que ledit certain nombre de trous de jet; déplacer ladite tête d'impression (1) pour aligner ladite zone ouverte (1A) sur ladite zone d'impression (2); activer, après avoir étalé une couche de poudre dans ladite zone d'impression (2), des trous de jet dans ladite zone ouverte (1A) de ladite tête d'impression (1) pour effectuer une impression de jet sélective sur ladite zone d'impression (2) selon un programme d'impression de tranche d'une couche courante; et abaisser ladite table de travail de ladite hauteur de une couche de poudre après que ladite couche courante a été imprimée;
étape 4, répéter l'étape 3 de manière itérative jusqu'à ce que tous les trous de jet dans ladite zone fermée arrière (1B) de ladite tête d'impression (1) soient ouverts et ladite largeur de ladite zone fermée avant (1C) soit la même que ladite largeur de ladite zone fermée arrière (1B) à l'étape 1; déplacer ladite tête d'impression (1) pour aligner ladite zone ouverte (1A) avec ladite zone d'impression (2); et abaisser ladite table de travail de ladite hauteur d'une couche de poudre après que l'étalement de puissance et l'impression d'un couche courant sont terminées, dans lequel à ce point un cycle d'utilisation en quinconce de tous les trous de jet de ladite tête d'impression (1) est terminé; et
étape 5, remettre ladite tête d'impression (1) dans l'état de l'étape 1 pour effectuer une impression dans un cycle suivant d'utilisation en quinconce desdits trous de jet, jusqu'à ce que l'impression tridimensionnelle d'un produit soit terminée.

3. Procédé d'impression tridimensionnelle en quinconce selon la revendication 1, le procédé comprenant les étapes consistant à :
étape 1, régler une largeur de ladite zone fermée avant (1C) le long de ladite direction de largeur de ladite tête d'impression (1) à zéro; régler une largeur de ladite zone fermée arrière (1B) à ladite largeur maximale; aligner ladite zone ouverte (1A) de ladite tête d'impression (1) sur une zone d'impression (2) d'une plateforme d'impression; étaler une couche de poudre sur ladite plateforme d'impression par un dispositif d'étalement de poudre; activer des trous de jet dans ladite zone ouverte (1A) de ladite tête d'impression (1) pour effectuer une impression de jet sélectif sur ladite zone d'impression (2) selon un programme d'impression en tranches; et abaisser une table de travail d'une hauteur d'une couche de poudre après qu'une couche courante a été imprimée;
étape 2, ouvrir un certain nombre de trous de jet dans ladite zone fermée arrière (1B) qui sont proches de ladite zone ouverte; fermer des trous de jet à une extrémité avant de ladite zone ouverte (1A) qui occupent la même largeur que ledit certain nombre de trous de jet pour former ladite zone fermée avant (1C) avec une largeur de ladite zone ouverte (1A) inchangée; déplacer ladite tête d'impression (1) vers une position où ladite zone ouverte (1A) est alignée sur ladite zone d'impression (2) de ladite plateforme d'impression; activer, après avoir étalé une couche de poudre dans ladite zone d'impression (2), des trous de jet dans ladite zone ouverte (1A) de ladite tête d'impression (1) pour effectuer une impression de jet sélectif sur ladite zone d'impression (2) selon un programme d'impression en tranches d'une couche courante; et abaisser ladite table de travail de ladite hauteur d'une couche de poudre après que ladite couche courante a été imprimée;
étape 3, ouvrir à nouveau un certain nombre de trous de jet dans ladite zone fermée arrière (1B) qui sont proches de ladite zone ouverte (1A); fermer des trous de jet dans ladite tête d'impression (1) qui sont proches de ladite zone fermée avant (1C) et occupent la même largeur que ledit certain nombre de trous de jet; déplacer ladite tête d'impression (1) pour aligner ladite zone ouverte (1A) sur ladite zone d'impression (2); activer, après avoir étalé une couche de poudre dans ladite zone d'impression (2), des trous de jet dans ladite zone ouverte (1A) de ladite tête d'impression (1) pour effectuer une impression de jet sélective sur ladite zone d'impression (2) selon un programme d'impression de tranche d'une couche courante; et abaisser ladite table de travail de ladite hauteur de une couche de poudre après que ladite couche courante a été imprimée;
étape 4, répéter l'étape 3 de manière itérative jusqu'à ce que tous les trous de jet dans ladite zone fermée arrière (1B) de ladite tête d'impression (1) soient ouverts et ladite largeur de ladite zone fermée avant (1C) soit la même que ladite largeur de ladite zone fermée arrière (1B) à l'étape 1; déplacer ladite tête d'impression (1) pour aligner ladite zone ouverte (1A) avec ladite zone d'impression (2); et abaisser ladite table de travail de ladite hauteur d'une couche de poudre après que l'étalement de puissance et impression d'une couche courante sont terminées, dans lequel, à ce point, un cycle d'utilisation en quinconce vers l'avant de tous les trous de jet de ladite tête d'impression (1) est terminé;
étape 5, ouvrir un certain nombre de trous de jet dans ladite zone fermée avant (1C) de ladite tête d'impression (1) qui sont proches de ladite zone ouverte, dans lequel ladite largeur de ladite zone fermée arrière (1B) le long de ladite direction de largeur de ladite tête d'impression (1) est nulle et ladite largeur de ladite zone fermée avant (1C) le long de ladite direction de largeur de ladite tête d'impression (1) est la largeur maximale après l'exécution de l'étape 4; fermer des trous de jet à une extrémité arrière de ladite zone ouverte (1A) qui occupent la même largeur que ledit certain nombre de trous de jet pour former ladite zone arrière fermée (1B) avec ladite largeur de ladite zone ouverte (1A) inchangée; déplacer ladite tête d'impression (1) vers une position où ladite zone ouverte (1A) est alignée sur ladite zone d'impression (2) de ladite plateforme d'impression; activer, après avoir étalé une couche de poudre dans ladite zone d'impression (2), des trous de jet dans ladite zone ouverte (1A) de ladite tête d'impression (1) pour effectuer une impression de jet sélectif sur ladite zone d'impression (2) selon un programme d'impression de tranche d'une couche courante; et abaisser ladite table de travail de ladite hauteur d'une couche de poudre après que ladite couche courante a été imprimée;
étape 6, ouvrir à nouveau un certain nombre de trous de jet dans ladite zone fermée avant (1C) qui sont proches de ladite zone ouverte (1A); fermer des trous de jet dans ladite tête d'impression (1) qui sont proches de ladite zone fermée arrière (1B) et occupent la même largeur que ledit certain nombre de trous de jet; déplacer ladite tête d'impression (1) pour aligner ladite zone ouverte (1A) sur ladite zone d'impression (2); activer, après avoir étalé une couche de poudre dans ladite zone d'impression (2), des trous de jet dans ladite zone ouverte (1A) de ladite tête d'impression (1) pour effectuer une impression de jet sélective sur ladite zone d'impression (2) selon un programme d'impression de tranche d'une couche courante; et abaisser ladite table de travail de ladite hauteur de une couche de poudre après que ladite couche courante a été imprimée;
étape 7, répéter l'étape 6 de manière itérative jusqu'à ce que tous les trous de jet dans ladite zone fermée avant (1C) de ladite tête d'impression (1) soient ouverts et ladite largeur de ladite zone fermée arrière (1B) soit nulle; déplacer ladite tête d'impression (1) pour aligner ladite zone ouverte (1A) avec ladite zone d'impression (2); et abaisser ladite table de travail de ladite hauteur d'une couche de poudre après que l'étalement de puissance et l'impression d'une couche actuelle sont terminés, dans lequel, à ce point, un cycle d'utilisation en quinconce inverse de tous les trous de jet de ladite tête d'impression (1) sont terminés; et
étape 8, répéter l'étapes 1 à 7 pour effectuer l'impression dans un cycle suivant d'utilisation en quinconce desdits trous de jet, jusqu'à ce que l'impression tridimensionnelle d'un produit soit terminée.

4. Procédé d'impression tridimensionnelle en quinconce selon la revendication 1, dans lequel une somme des largeurs de ladite zone fermée avant (1C) et de ladite zone fermée arrière (1B) de ladite tête d'impression (1) est de 5 % à 40 % d'une largeur totale de ladite tête d'impression (1).

5. Procédé d'impression tridimensionnelle en quinconce selon la revendication 4, dans lequel ladite somme desdites largeurs de ladite zone fermée avant (1C) et de ladite zone fermée arrière (1B) de ladite tête d'impression (1) est de 7 % à 10 % de ladite largeur totale de ladite tête d'impression (1).

6. Système d'impression tridimensionnelle en quinconce configuré de telle sorte qu'une pluralité de trous de jet agencés sur les deux côtés d'une tête d'impression (1) le long d'une direction de largeur sont fermés et ouverts cycliquement, et de sorte que les positions de jet de chaque trou de jet sur des couches adjacentes dans une zone d'impression (2) sont en quinconce les unes par rapport aux autres dans un processus d'impression couche par couche; et les trous de jet agencés le long de ladite direction de largeur de ladite tête d'impression (1) sont divisés en une zone fermée avant (1C), une zone fermée arrière (1B) et une zone ouverte (1A) entre ladite zone fermée avant (1C) et ladite zone fermée arrière (1B) et pour effectuer une impression de jet; et dans un procédé d'impression couche par couche, des trous de jet dans ladite zone fermée arrière (1B) sont ouverts couche par couche, et des trous de jet dans ladite zone fermée avant (1C) sont fermés couche par couche, de sorte que les trous de jet à une extrémité avant et une extrémité arrière de ladite zone ouverte (1A) sont cycliquement fermés et ouverts en quinconce couche par couche pour maintenir une largeur de ladite zone ouverte (1A) inchangé dans l'impression de toutes les couches,
**caractérisé en ce que** ledit système d'impression tridimensionnelle en quinconce est en outre configuré de sorte que les largeurs de ladite zone fermée avant (1C) et de ladite zone fermée arrière (1B) de ladite tête d'impression (1) sont modifiées couche par couche en quinconce, et lesdites largeurs desdites deux zones fermées augmentent ou diminuent entre zéro et une largeur maximale couche par couche.

7. Système d'impression tridimensionnelle en quinconce selon la revendication 6, dans lequel une somme des largeurs de ladite zone fermée avant (1C) et de ladite zone fermée arrière (1B) de ladite tête d'impression (1) est de 5 % à 40 % d'une largeur totale de ladite tête d'impression (1).

8. Système d'impression tridimensionnelle en quinconce selon la revendication 7, dans lequel ladite somme desdites largeurs de ladite zone fermée avant (1C) et de ladite zone fermée arrière (1B) de ladite tête d'impression (1) est de 7 % à 10 % de ladite largeur totale de ladite tête d'impression (1).
